# EUROPEAN PATENT APPLICATION

(11) **EP 0 806 231 A2**
(43) Date of publication of application: **12.11.1997**
(21) Application number: 97303122.2
(22) Date of filing: 08.05.1997
(51) Int. Cl.: B01D 27/06, B01D 27/08

(54) **Filter**

(30) Priority: 09.05.1996 GB 9609672
(71) Applicant: LUCAS INDUSTRIES public limited company, Solihull, B90 4LA (GB)
(72) Inventor: Bradford, Francis Peter, Sheerness, Kent ME12 3HX (GB)
(74) Representative: Bailey, Richard Alan

(57) **Abstract**

A filter comprises a generally cylindrical body housing a filter medium (18). In use, fuel flows through the filter medium (18) in a generally radial direction, for example in a radially inward direction, from a first radial position to a second radial position. The first radial position is defined by a chamber (20) which is located within the body. The body includes inlet means opening into the lower part of the chamber (20).

## Description

This invention relates to a filter, and in particular to a filter of the type in which the liquid, for example diesel fuel, to be filtered flows in a generally radial direction through a generally cylindrical filter medium.

In a conventional fuel filter, a pleated paper filter member is provided within a generally cylindrical body. The body includes generally circular end walls which are interconnected by an outer cylindrical wall and an inner cylindrical wall, both of the cylindrical walls being perforated. The upper end wall is provided with an outlet aperture which communicates with a central chamber defined by the inner cylindrical wall.

In use, the filter is located within a closed, cup-like cylindrical housing of diameter greater than the body of the filter, thus an annular chamber is defined therebetween. The housing includes an inlet arranged to communicate with the annular chamber, and an outlet which communicates with the outlet of the filter. Suitable seals are provided to ensure that fuel flowing between the inlet and outlet of the housing passes through the filter.

Where the filter is used to filter diesel fuel, it is desirable for any water and other contaminants carried by the diesel fuel to be removed therefrom. In the conventional filter, water is carried with the fuel through the filter, thus water separation and removal by the filter is inefficient. It is an object of the invention to provide a filter in which this disadvantage is reduced.

Various modifications to the conventional filter are known. For example, the outer perforated wall may be omitted.

According to a first aspect of the invention there is provided a filter comprising a generally cylindrical body housing a filter medium arranged such that, in use, fuel flows through the filter medium between a first radial position and a second radial position, wherein the first radial position is defined by a first chamber located within the body, an inlet communicating with the bottom of the first chamber.

It will be understood that the flow of fuel between the first and second radial positions may have an axial component in addition to a radial component, thus the first and second radial positions are not necessarily axially aligned with one another.

The invention further relates to a filter assembly comprising a housing, a filter in accordance with the first aspect located within the housing, the filter and housing defining a chamber through which fuel flows prior to entering the filter through the inlet thereof, the direction of fuel flow through the chamber being in a direction other than the direction of fuel flow into the filter.

The invention will further be described, by way of example, with reference to the accompanying drawings, in which:
Figure 1 is a diagrammatic cross-sectional view of a filter in accordance with an embodiment of the invention;
Figure 2 is a cross-sectional view along the line 2-2 of Figure 1;
Figures 3a and 3b are views illustrating alternative upper end pieces;
Figures 4a and 4b are views of an alternative lower end piece;
Figure 5 is a view similar to Figure 4b of a further alternative;
Figure 6 is a view similar to Figure 1 of an alternative embodiment;
Figure 7 illustrates a modification of the embodiment of Figure 6; and
Figures 8 and 9 illustrate alternative types of filter.

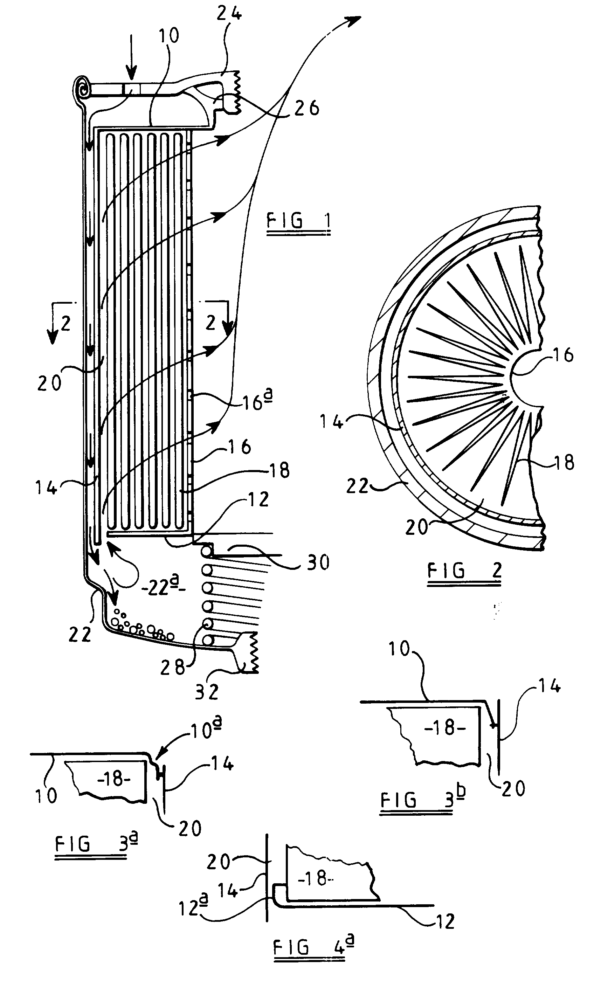

The filter illustrated in Figures 1 and 2 comprises a generally cylindrical body defined by upper and lower generally circular end pieces 10, 12 and an outer cylindrical wall 14 interconnecting the upper and lower end pieces 10, 12. An inner generally cylindrical wall 16 also interconnects the upper and lower support plates or end pieces 10, 12, the inner cylindrical wall 16 being substantially coaxial with the outer cylindrical wall 14. The end pieces 10, 12 and walls 14, 16 are conveniently constructed of plastics or aluminium, although other materials may be used, for example the wall 14 may be constructed of paper. Further, the inner wall 16 may be omitted.

As illustrated in Figure 1, the outer peripheral wall 14 differs from that of the conventional filter by not being provided with perforations, whilst the inner generally cylindrical wall 16 includes perforations 16a which are spaced apart in an axial direction of the wall 16.

The upper end piece 10 includes a central opening which is aligned with the axis of the inner cylindrical wall 16, the outer peripheral edge of the upper end piece 10 being sealed to the outer cylindrical wall 14 by fit or using a suitable adhesive. The lower end piece 12 also includes a central aperture which is aligned with the inner cylindrical wall 16. The peripheral edge of the lower end piece 12 is also connected to the outer cylindrical wall 14, but at spaced locations around the outer peripheral edge of the lower end piece 12, recesses are formed therein, the recesses formed in the lower end piece 12 defining, with the outer cylindrical wall 14, apertures whereby fuel can flow into the filter body.

A pleated filter medium 18, for example, a pleated paper or other fibrous material filter, is located within the body between the upper and lower end pieces 10, 12 and the inner and outer generally cylindrical walls 14, 16, the folds of the pleated filter material extending substantially parallel to the axis of the body. The folds of the pleated filter material 18 which are remote from the axis of the body are spaced from the outer cylindrical wall 14, thus an annular chamber 20 which communicates with the apertures defined by the outer wall 14 and the lower end piece 12 is defined. In order to avoid fuel by-passing the filter medium 18, the upper and lower edges of the filter medium 18 are sealed to the upper and lower end pieces 10, 12, for example using a suitable resin.

In use, the filter is located within a housing comprising a cup 22 to which is sealed a lid 24. The cup 22 is of diameter slightly larger than the outer diameter of the outer wall 14, thus when the filter is located coaxially within the cup 22, an annular chamber is defined therebetween permitting fuel to flow from above the upper end piece 10 of the filter through the annular chamber to a chamber 22a below the lower end piece 12 thereof. The lid 24 is provided with an inlet which communicates with a chamber defined above the upper end piece 10, the lid 24 also being provided with an outlet which communicates with the aperture provided in the upper end piece 10, a seal 26 being located within the housing in order to ensure that fuel flowing between the inlet and the outlet flows through the filter medium 18. As illustrated in Figure 1, the lower end piece 12 is lifted from the lower end of the cup 22 by a spring 28 which engages a spring abutment 30, the spring abutment 30 in turn sealingly engaging the lower surface of the lower end piece 12 to ensure that fuel flow between the inlet and outlet of the filter body requires the fuel to flow through the filter medium 18. The cup 22 is further provided with an aperture within which a screw-threaded plug 32 is provided in order to permit water collected in the cup 22 to be removed. It will be appreciated that arrangements other than that described hereinbefore for supporting the filter body may be used.

In use, fuel is supplied to the inlet of the filter body, the fuel flowing through the annular chamber defined between the cup 22 and the outer cylindrical wall 14 of the filter to the chamber 22a defined between the cup 22 and the lower end piece 12 of the filter. The fuel then enters the filter through the apertures defined between the lower end piece 12 and outer wall 14 the fuel flowing into the annular chamber 20 and then passing through the pleated filter member 18, through the perforations 16a of the inner wall 16 and from there to the outlet of the filter and the outlet provided in the lid 24.

As water carried within the diesel fuel is of greater density than the fuel itself, the downward movement of the fuel and water through the annular chamber defined between the cup 22 and the outer wall 14 of the filter and the subsequent change in the direction of flow to enter the chamber 20 promotes separation of the water from the diesel fuel, the higher density of the water resulting in the water tending to continue its downward movement when it reaches the chamber 22a defined between the cup 22 and the lower end piece 12 of the filter whilst the relatively low density diesel fuel is able to undergo a change of direction in its flow to enable it to flow through the apertures defined between the lower end piece 12 and wall 14 to enter the filter. The water droplets which tend to collect in the cup 22 can be removed therefrom periodically by removing the plug 32 and draining the water through the aperture.

Figures 3a and 3b illustrates two possible profiles for the upper end piece 10. The end piece 10 illustrated in Figure 3a is shaped adjacent its outer periphery so as to include a step 10a which, in use, locates the pleated filter material 18 so as to ensure that the filter material remains correctly located with respect to the remainder of the filter, and in particular to ensure that the filter material 18 does not extend into the annular chamber 20. The outer peripheral edge of the upper end piece 10 is sealed using any suitable technique to the outer wall 14 so that fuel cannot escape between the upper end piece 10 and outer wall 14.

The end piece 10 shown in Figure 3b differs from that of Figure 3a in that rather than providing the end piece 10 with a stepped region 10a, the outer edge region of the upper end piece 10 is angled downwardly, the shaping of the upper end piece 10 being sufficient to prevent the pleated filter medium 18 from obstructing the annular chamber 20. Again, any suitable technique is used to seal the outer edge of the upper end piece 10 to the outer wall 14.

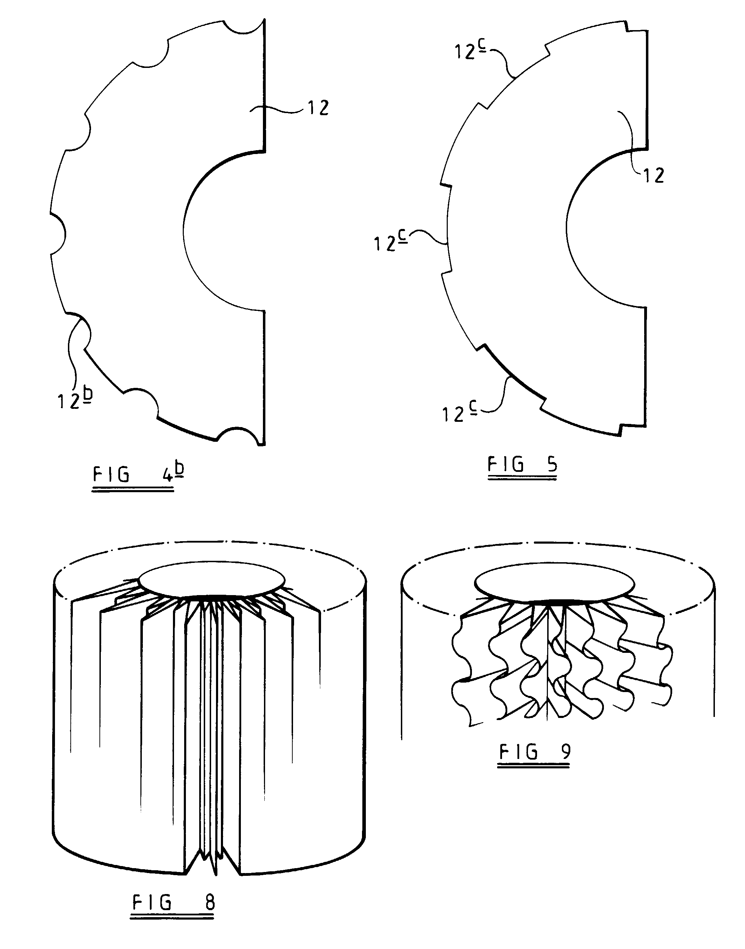

Figures 4a and 4b illustrate a lower end piece 12 suitable for use in the embodiment of Figure 1. The lower end piece 12 illustrated in Figures 4a and 4b comprises a generally circular disc the outer peripheral edge of which is turned upwardly as denoted by 12a in Figure 4a. The outer peripheral edge is further provided with a series of part circularly shaped recesses 12b (see Figure 4b), the recesses 12b together with the outer peripheral wall 14 defining a plurality of apertures through which fuel is permitted to flow in use in order to enter the annular chamber 20. As illustrated in Figure 4a, the recesses 12b are of dimensions such that fuel is not permitted to flow directly through the recesses 12b to the "clean" side of the filter member 18, all of the fuel flowing through the recesses 12b entering the annular chamber 20 on the "dirty" side of the filter member 18.

The lower end piece 12 illustrated in Figure 5 differs from that of Figure 4 in that rather than providing a series of part-circular recesses 12b in the outer edge of the lower end piece 12, a series of spaced, elongate recesses 12c are provided, again the dimensions of these recesses being such that fuel flowing through the recesses is permitted to enter the annular chamber 20 on the "dirty" side of the filter member 18 but not to gain direct access to the "clean" side of the filter member 18.

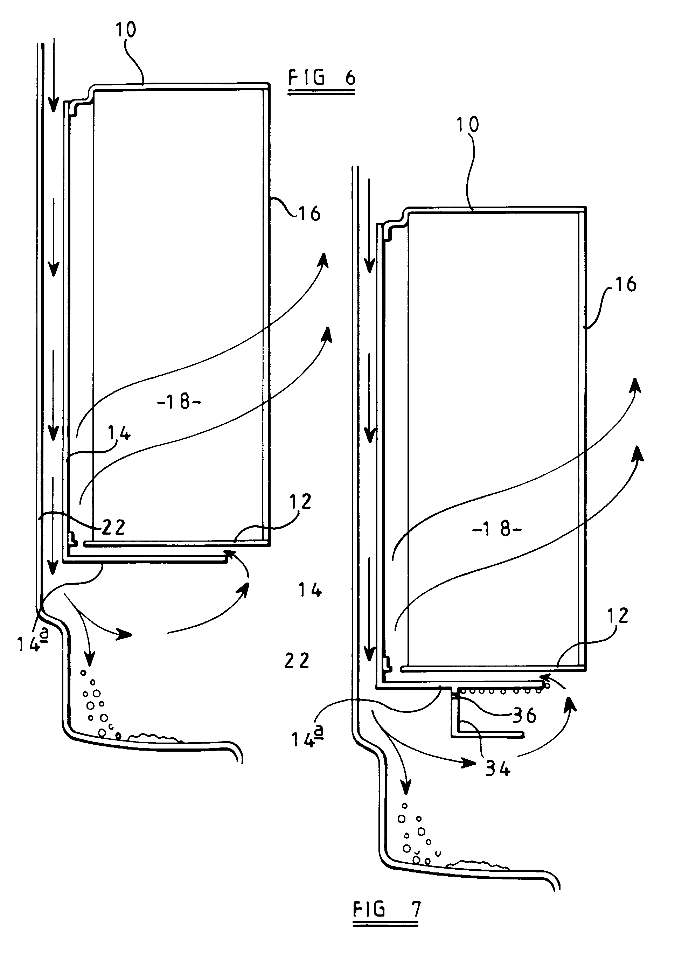

The filter illustrated in Figure 6 differs from that illustrated in Figure 1 in that the outer wall 14 of this embodiment is modified so as to include a member or region 14a which extends substantially parallel to the lower end piece 12, the region 14a being axially spaced from the lower end piece 12 so as to define a flow passage through which fuel must flow in order to gain access to the inlet recesses provided in the lower end piece 12. The provision of the region 14a has the effect of further separating the flow path of the diesel fuel from the flow path of water droplets carried by the diesel fuel and thus improves the efficiency of the separation of water from the diesel fuel.

Figure 7 illustrates a modification to the embodiment of Figure 6 in which the region 14a is provided with a downwardly extending cylindrical wall 34 which is provided with one or more small orifices 36. Operation of this modification is similar to the arrangement of Figure 6 with the exception that, in use, air carried by the flow of fuel will tend to collect against the region 14a, the wall 34 restricting the flow of air. The orifice(s) 36 permit the air to flow through the wall 34 in a controlled manner, the air flowing through the orifice(s) 36 as a stream of small bubbles.

The description hereinbefore only describes arrangements in which the fuel is arranged to flow from a radially outer position to a radially inner position, but it will be understood that the arrangements could be modified so as to improve the efficiency of water separation from fuel in an arrangement in which fuel is intended to flow from a radially inner position to a radially outer position.

The description hereinbefore suggest that the invention is suitable for use with pleated paper filters. It will be recognised that the paper may, for example, be 'single pleat' paper as illustrated in Figures 1 and 2, 'double pleat' paper as illustrated diagrammatically in Figure 8, or crushed single or double pleat paper as illustrated in Figure 9. Indeed, the filter medium may take the form of another fibrous material, for example felt, or may be a sinter material.

## Claims

1. A filter comprising a generally cylindrical body housing a filter medium (18) arranged such that, in use, fuel flows through the filter medium from a first radial position to a second radial position, wherein the first radial position is defined by a first chamber (20) located within the body, the body including inlet means opening into the lower part of the first chamber (20).

2. A filter as claimed in Claim 1, wherein the body comprises an outer cylindrical wall (14), and upper and lower support plates (10, 12), the first chamber (20) being defined between the upper and lower support plates (10, 12), the outer wall (14) and the filter medium (18).

3. A filter as claimed in Claim 2, wherein the inlet means comprises a plurality of openings (12b, 12c) defined between the outer wall (14) and outer periphery of the lower support plate (12).

4. A filter as claimed in Claim 2 or Claim 3, wherein the upper support plate (10) is shaped to space the filter medium (18) from the outer wall (14).

5. A filter as claimed in any one of Claims 2 to 4, further comprising an annular member (14a) extending parallel to the lower support plate (12), the annular member (14a) being carried by the outer wall (14) and including an opening located radially inward of the inlet means.

6. A filter as claimed in Claim 5, further comprising a downwardly extending wall (34) defining, with the annular member (14a), an air collection region, and at least one opening (36) provided in the wall (34) whereby air can escape in a controlled manner from the air collection region.

7. A filter as claimed in any one of the preceding claims, wherein the filter medium (18) comprises a pleated paper member.

8. A filter assembly comprising a housing (22, 24) having an inlet and an outlet, and a filter as claimed in any one of the preceding claims, wherein the outlet communicates with the second radial position and the inlet communicates with the inlet means, the housing and filter defining a chamber through which fuel flows prior to entering the first chamber (20), wherein the direction of fuel flow through the said chamber is in a direction other than the direction in which fuel flow through the inlet means, in use.
